(19) Europäisches Patentamt
European Patent Office
Office européen des brevets

(11) EP 0 978 532 B1

(12) # EUROPÄISCHE PATENTSCHRIFT

(45) Veröffentlichungstag und Bekanntmachung des Hinweises auf die Patenterteilung:
**01.10.2003 Patentblatt 2003/40**

(51) Int Cl.[7]: **C08L 21/00**, C08L 19/00, C08K 5/17

(21) Anmeldenummer: **99114744.8**

(22) Anmeldetag: **28.07.1999**

(54) **Kautschukmischung**

Rubber composition

Composition de caoutchouc

(84) Benannte Vertragsstaaten:
**AT BE CH CY DE DK ES FI FR GB GR IE IT LI LU MC NL PT SE**

(30) Priorität: **01.08.1998 DE 19834803**

(43) Veröffentlichungstag der Anmeldung:
**09.02.2000 Patentblatt 2000/06**

(73) Patentinhaber: **Continental Aktiengesellschaft
30165 Hannover (DE)**

(72) Erfinder:
- **Obrecht, Werner, Dr.
47447 Moers (DE)**
- **Scholl, Thomas, Dr.
51469 Bergisch Gladbach (DE)**
- **Wendling, Peter
51357 Leverkusen (DE)**
- **Well, Michael, Dr.
38159 Vechelde (DE)**
- **Monroy, Victor, Dr.
Charlotte, NC 28270 (US)**

(56) Entgegenhaltungen:
**EP-A- 0 854 170** **US-A- 4 268 642**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 978 532 B1

## Beschreibung

Die Erfindung betrifft eine Kautschukmischung, die zumindest eine Kautschukkomponente, zumindest einen Füllstoff, als Füllstoff ein Gel, das im wesentlichen aus einem Kautschuk besteht, eine Partikelgröße von $3 \cdot 10^{-9}$ bis $1 \cdot 10^{-6}$ m und einen Quellungsindex in Toluol von 1 bis 15 besitzt, sowie übliche Zusatzstoffe enthält.

Kautschukmischungen werden für die Herstellung von Gummiprodukten verschiedenster Anwendungen verwendet. Je nach dem Einsatzgebiet werden auch unterschiedliche Anforderungen an die entsprechende Kautschukmischung gestellt. So enthält die Kautschukmischung außer den Kautschukkomponenten weitere Bestandteile wie z. B. Füllstoffe, Alterungsschutzmittel und Vulkanisationsmittel, die wesentlich die Eigenschaften des fertigen Gummiproduktes beeinflussen. Es müssen daher geeignete Systeme Polymer/weitere Bestandteile bereitgestellt werden, um die entsprechenden Eigenschaften des Gummiproduktes zu erhalten. Insbesondere kommt den Füllstoffen in einer Kautschukmischung wesentliche Bedeutung zu. So tragen sie nicht nur zur Verbilligung von Kautschukmischungen bei, sondern wird ihre spezifische Wirkung auf den Kautschuk ausgenutzt. Daher hat es nicht an Versuchen gemangelt z. B. unterschiedlichste Füllstoffe in die Kautschukmischung einzumischen. So sind als Füllstoffe z. B. Ruß und Kieselsäure bekannt. Es konnte beobachtet werden, daß Gummiprodukte, die als Füllstoff z. B. Ruß enthalten eine ausreichende mechanische Belastbarkeit besitzen, jedoch tritt bei Verwendung dieser Mischungen in Reifenlaufstreifen der Nachteil auf, daß die entsprechenden Reifen einen hohen Rollwiderstand und ein schlechtes Naßrutschverhalten zeigen. Dieses Problem wurde dadurch versucht zu lösen, in die Laufstreifenmischung Kieselsäure einzumischen, wobei zur Anbindung an das Polymer wiederum ein Füllstoffaktivator erforderlich ist. Allerdings konnte beobachtet werden, daß Gummiprodukte, die als Füllstoff Kieselsäure und als Füllstoffaktivator ein herkömmliches Organosilan (z. B. Bis-3-(triethoxysilylpropyl)tetrasulfid) enthalten, das Hystereseverhalten und die Verstärkung des Gummiproduktes für heutige Anwendungsbereiche unzureichend beeinflussen. So werden insbesondere für die Herstellung von Fahrzeugreifen (z. B. Laufstreifen) Kautschukmischungen gefordert, die im vulkanisierten Zustand dem Reifen einen noch geringeren Rollwiderstand bei weiterhin verbessertem Naßrutschverhalten verleihen. Gleichzeitig sollen andere mechanische Eigenschaften wie z. B. Haltbarkeit möglichst nicht negativ beeinflußt werden.

Aus der EP-A-0 854 170 sind Kautschukmischung mit SBR-Gelen bekannt, deren Vulkanisate Vorteile im Naßrutschverhalten und im Rollwiderstand ergeben sollen.

Die Aufgabe der hier vorliegenden Erfindung besteht darin Kautschukmischungen bereitzustellen, die im vulkanisierten Zustand ein verbessertes Hystereseverhalten zeigen, so daß z. B. beim Einsatz dieser Kautschukmischungen in Reifen, im Vergleich zu herkömmlichen, der Rollwiderstand verringert und das Naßrutschverhalten verbessert wird. Außerdem soll die Elastomermischung durch die Verwendung eines geeigneten Füllstoffsystems besser verstärkt werden.

Gelöst wird diese Aufgabe erfindungsgemäß durch eine Kautschukmischung der eingangs genannten Art, bei der

**a)** das Gel an seiner Oberfläche elektrophile Zentren aufweist, und
**b)** die Kautschukmischung weiterhin eine als Kupplungsagens zwischen den zumindest vorvemetzten Gelpartikeln unter Ausbildung von chemischen Bindungen und Erzeugung eines Gelpartikelsystems wirkende Substanz mit folgender Struktur

$$A - R - A$$

aufweist,
wobei

A: nucleophile Gruppe,

insbesondere $-NH_2$,
$-SH$,
$-Si-OH$,
$-OH$,
$-NHR^1$ mit $R^1$ = Alkylrest mit bis zu 3 Kohlenstoffatomen oder Phenylrest,

R: gesättigter oder ungesättigter Kohlenwasserstoffrest mit einem Molekulargewicht bis zu $10^6$ g/mol oder Siloxanrest mit einem Molekulargewicht bis zu $10^6$ g/mol.

Durch geeignete Auswahl der Funktionalitäten des Gels und des Kupplungsagens' wird unter Ausbildung von chemischen Bindungen ein Gelpartikelsystem erzeugt, daß nach der Vulkanisation ein Gummiprodukt für verschiedenste Anwendungen mit guten mechanischen Eigenschaften z. B. hinsichtlich des Spannungswertes liefert. Außerdem können erfindungsgemäß nunmehr Vulkanisate zur Verfügung gestellt werden, die ausgezeichnete Dämpfungseigenschaften aufweisen, so daß sie insbesondere für den Einsatz in Reifenlaufstreifen aufgrund der Senkung des Rollwiderstandes und gleichzeitiger Verbesserung des Naßrutschverhaltens geeignet sind. Durch die Verwendung der erfindungsgemäßen Kautschukmischung kann z. B. auch auf den Einsatz von Kieselsäure verzichtet werden, wodurch die damit verbundenen Probleme, die durch die geringe elektrische Leitfähigkeit kieselsäuregefüllter Mischungen auftreten können, vermieden werden.

Das Gel besteht im wesentlichen aus einem Kautschuk, d. h. aus zumindest einer Kautschukkomponente (z. B. NR, BR, SBR, NBR) und gegebenfalls weiteren Zusatzstoffen, wie z. B. Alterungsschutzmitteln.

Die Herstellung der Polymermatrix des in der erfindungsgemäßen Kautschukmischung eingesetzten Gels, an dessen Oberfläche sich elektrophile Zentren befinden, kann z. B. auf folgende Weise erfolgen:

1. durch Copolymerisation von zumindest zwei Monomeren z. B. Polymerisation von Butadien mit p-Chlormethylstyrol
2. nachträgliche Funktionalisierung eines Polymers (z. B. durch Aufpfropfen) z. B. Styrol-Butadien-Copolymer auf das p-Chlormethylstyrol aufgepfropft ist
3. nachträgliche Modifizierung eines Polymeres (z. B. durch Spaltung von Estergruppen) z. B. Polymerisation von Butadien mit Methacrylsäuremethylester und anschließender Hydrolyse

Die Herstellung der Gele erfolgt aus der Latexphase des Polymers und wird im folgenden näher beschrieben:

Nach entsprechender Koagulation des Kautschuklatex der z. B. nach den obengenannten Verfahren 1 bis 3 hergestellt werden kann, wird dieser unter Zugabe eines Vernetzungsmittels (z. B. eines Peroxides (z. B. Dicumylperoxid)) z. B. in einem Autoklaven vernetzt. Es wird soviel Vemetzungsmittel zugegeben, daß der Quellungsindex in Toluol des Gels (anmeldungsgemäß wird Latex, der durch Zugabe eines zusätzlichen Vernetzungsmittels zumindest vorvemetzt wird, als Gel bezeichnet) zwischen 1 und 15, bevorzugt zwischen 1 und 10, eingestellt wird. Es ist aber auch möglich, die Oberfläche des Latex' nach Einstellung des Quellungsindexes (Herstellung des Gels) nach z. B. den obengenannten Verfahren 2 und 3 mit elektrophilen Zentren zu versehen.

Weiterhin ist es möglich zur Latexphase oder auch zum Gel weitere Zusatzstoffe wie z. B. Alterungsschutzmittel zu geben. Das Gel wird entnommen, abfiltriert, gewaschen und bis zur Gewichtskonstanz getrocknet. Das erhaltene Gel weist eine Partikelgröße von 3 bis 1000 nm (bestimmt nach der Ultrazentrifugationsmethode DIN 53 206) auf. Es besteht aber auch die Möglichkeit den vor- bzw. vernetzten Latex (Gel) gemeinsam mit unvernetzten Latex zu fällen (Erzeugung eines Masterbatches), so daß auf eine extra Isolierung des Gels verzichtet werden kann.

Der Quellungsindex ($Q_i$) der Gele wird aus dem Gewicht des lösungsmittelhaltigen Gels (nach Zentrifugation mit 20000 Upm) und dem Gewicht des trockenen Gels berechnet:

$$Q_i = \text{Naßgewicht des Gels / Trockengewicht des Gels}$$

Zur Ermittlung des Quellungsindex werden z. B. 250 mg Gel in 25 ml Toluol 24 Stunden unter Schütteln quellen gelassen. Das Gel wird abzentrifugiert (mit 20000 Upm) und gewogen (Naßgewicht) und anschließend bei 70 °C bis zur Gewichtskonstanz getrocknet und abermals gewogen (Trockengewicht).

An der Oberfläche der Gele befinden sich Gruppen, wie z. B. Halogene (bevorzugt Chlor, Brom), $-NH_2$, -OH, u. a. die ein positives (elektrophiles) Zentrum erzeugen, an dem ein nucleophiler-Angriff (nucleophile Substitution) von A der angegebenen Kupplungsagenzien erfolgen kann.

Das Gel ist vorzugsweise ein mit p-Chlormethylstyrol modifizierter Styrol-Butadien-Kautschuk mit einem Quellungsindex in Toluol von 1 bis 15 und einer Partikelgröße von $3 \cdot 10^{-9}$ bis $1 \cdot 10^{-6}$ m.

Die Eigenschaftsverbesserungen zeigten sich besonders deutlich, wenn in der Kautschukmischung bezogen auf 100 Teile der Gesamtkautschukmasse 10 bis 110 phr Gel enthalten sind.

Das Kupplungsagens kann als nucleophile Gruppe A bevorzugt $-NH_2$, $-NHR^1$, $-NR^1_2$ mit $R^1$ = Alkylrest mit bis zu 3 Kohlenstoffatomen oder -Si-OH, -OH aufweisen. Es sind aber noch weitere Gruppen denkbar, die einen nucleophilen Angriff am positivierten Zentrum des Gels vornehmen. Vorteilhafterweise sind beide A des Kupplungsagens' gleich.

Als R des Kupplungsagens' werden Kohlenwasserstoffreste (vorzugsweise aliphatische) oder Siloxanreste (z. B. Polydimethylsiloxan) mit einem Molekulargewicht bevorzugt bis 10000, wiederum bevorzugt bis zu 5000 g/mol eingesetzt.

Die Menge an zugegebenem Kupplungsagens richtet sich nach der Zahl der elektrophilen Zentren auf dem

Gel, so daß z. B. ca. 25 bis 100 % der Anzahl dieser reaktiven Gruppen des Gels mit dem Kupplungsagens eine chemische Bindung eingehen. Es können auch mehrere verschiedene Kupplungsagenzien eingemischt werden.

Bevorzugt ist, wenn die Kautschukmischung als Kupplungsagens eine Substanz mit folgender Struktur aufweist:

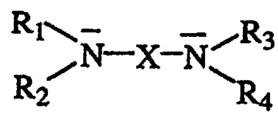

mit

| | |
|---|---|
| $R_1$, $R_2$, $R_3$, $R_4$ -H; | -Alkylrestverzweigt oder unverzweigt mit bis zu 4 C-Atomen |
| $R_1$, $R_2$, $R_3$, $R_4$ | können gleich oder verschieden voneinander sein |
| X: | -Alkylenrest verzweigt oder unverzweigt oder cyclisch mit bis zu 12 C-Atomen |

Als besonders bevorzugt, z. B. hinsichtlich der Bereitstellung der Substanzen, haben sich 1,8-Diaminooctan und 1,4-Bisdimethylaminobutan erwiesen. Am Beispiel des 1,8-Diaminooctans soll die chemische Reaktion mit den Gelen dargestellt werden:

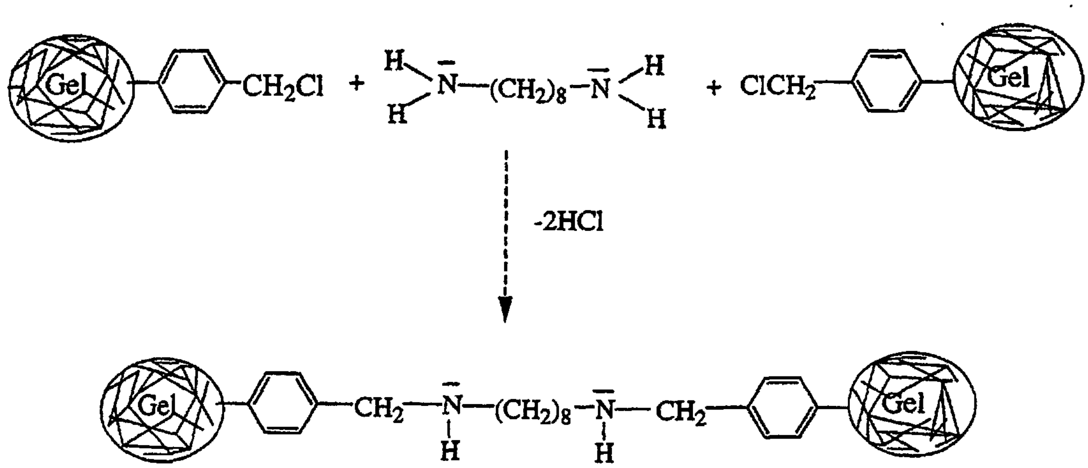


Als weitere bevorzugte Kupplungsagenzien zeigten sich Substanzen mit folgender Struktur:

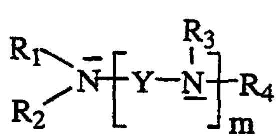

mit

| | |
|---|---|
| $R_1$, $R_2$, $R_3$, $R_4$; -H; | -Alkylrestverzweigt oder unverzweigt mit bis zu 4 C-Atomen |
| $R_1$, $R_2$, $R_3$, $R_4$ | können gleich oder verschieden voneinander sein |
| Y: | -Alkylenrest verzweigt oder unverzweigt mit bis zu 4 C-Atomen |
| m: | 1 bis 6 |

Als bevorzugter Vertreter dieser Klasse sei Pentaethylenhexamin genannt.

Weiterhin können z. B.

a) OH-gruppen terminiertes Polybutadien (z. B. "Liquiflex" (flüssiges BR-Molekulargewicht: ca. 2000 - 3000) der Fa. Petroflex, Brasilien)

b) $NH_2$-gruppen terminiertes Copolymer aus Butadien und Acrylnitril mit einem Molekulargewicht von 3000 bis 4500 g/mol und einem Acrylnitrilgehalt von 5 bis 30 Gewichtsprozent

(z. B. ATBN 1300X42 "Hycar" (Molekulargewicht: ca. 3500- 4000 g/mol, Glastemperatur: -59 °C, Acrylnitrilgehalt: 18 %) der Fa. BFGoodrich Company, USA) oder

c) $NH_2$-gruppen enthaltendes Polydimethylsiloxan (z. B. AC 3309 mit 0,33 Mol $NH_2$/g der Fa. Bayer AG, Leverkusen, Deutschland) als Kupplungsagenzien verwendet werden.

Insbesondere die unter a) und b) angegebenen Verbindungen sind vorteilhafter Weise aufgrund ihres Doppelbindungsanteils in der Lage während der Vulkanisation mit der restlichen Elastomermatrix zu vernetzen, was zu Produkten mit verbesserten mechanischen Eigenschaften führt.

Des weiteren enthält die erfindungsgemäße Kautschukmischung übliche Zusatzstoffe wie Alterungsschutzmittel (z. B. 6PPD: N-Phenyl-N'-(1,3-dimethylbutyl)-p-phenylendiamin oder DTPD: N,N'-Ditoluyl-p-phenylendiamin), Verarbeitungshilfsmittel (z. B. Stearinsäure, Wachse, Fette, Dispergatoren) und Weichmacher (z. B. Phthalsäureester).

Als weitere Füllstoffe, die in der erfindungsgemäßen Kautschukmischung enthalten sein können, werden insbesondere herkömmliche aktive Füllstoffe wie Ruß und Kieselsäure gezählt. Die Ruße können folgende Charakteristika aufweisen: DBP-Zahl (ASTM-D 2414) 90 bis 200 $cm^3$ /100 g und CTAB-Zahl (ASTM-D 3765) von 35 bis 220 $m^2$/g. Die Kieselsäure kann z. B. eine BET-Oberfläche von 145 - 270 $m^2$/g (ASTM D 5604), eine CTAB-Zahl von 120 - 285 $m^2$/g (ASTM D 3765) und ein Porenvolumen von 0,7 1,7 ml/g (DIN 66133) aufweisen. Als Kieselsäure kann somit z. B. *VN*3 (Fa. Degussa AG, Deutschland) zum Einsatz kommen. Weiterhin können inaktive Füllstoffe wie z. B. Kreide in der Kautschukmischung enthalten sein. Des weiteren können auch gewisse Anteile von unvernetzten Gelen bzw. Gelen die nicht die entsprechenden Charakteristika aufweisen in der Kautschukmischung enthalten sein, was bedingt durch das Gelherstellungsverfahren sein kann. Deren Anteil sollte aber möglichst gering gehalten werden, um die Eigenschaften des Vulkanisates nicht negativ zu beeinflussen.

Zur Vulkanisation der Kautschukmischung können Schwefel bzw. Schwefelspender (z. B.: DTDM-Dimorpholyldisulfid) verwendet werden. Es ist aber auch möglich die Vulkanisation unter Zuhilfenahme anderer Vulkanisationsmittel (z.B. Peroxide, Harze, Strahlung) ablaufen zu lassen. Außerdem werden vulkanisationsbeeinflussende Stoffe wie Beschleuniger oder Aktivatoren für die entsprechende Vulkanisationsart (z. B. für die Schwefelvulkanisation - z. B. CBS: Benzothiazyl-2-cyclohexylsulfenamid, TMTD: Tetramethylthiuramdisulfid, TBBS: Benzothiazyl-2-tert.-butylsulfenamid) der Kautschukmischung zugesetzt.

Die erfindungsgemäße Kautschukmischung enthält als Kautschukkomponente zumindest ein Polymer ausgewählt bevorzugt aus Naturkautschuk oder cis-Polyisopren mit einem cis-1,4-Anteil > 90 mol% oder Styrol-Butadien-Copolymer oder Polybutadien oder Mischungen hieraus.

Das Polyisopren kann durch stereospezifische Polymerisation in Lösung mit Ziegler-Natta-Katalysatoren (z. B. $TiCl_4/Al(Alkyl)_3$) oder unter Verwendung von fein verteiltem Lithiumalkylen (z. B. n-Butyllithium) erhalten werden. Bevorzugte Styrol-Butadien-Copolymere sind solche mit Gehalten an einpolymerisiertem Styrol von 18 bis 60, vorzugsweise 20 bis 50 Gew.%. Lösungs- oder Emulsionspolymerisate sind bevorzugt.

Für die erfindungsgemäße Kautschukmischung soll weiterhin Polybutadien bevorzugt verwendet werden. Dabei ist es unerheblich nach welchen Verfahren dieses hergestellt worden ist.

Weiterhin kann die erfindungsgemäße Kautschukmischung ein oder mehrere aus dem Stand der Technik bekannte Kautschukkomponenten enthalten, z. B. folgende: Butylkautschuk (IIR), Acrylnitril-Butadien-Copolymer (NBR), hydriertes Acrylnitril-Butadien-Copolymer (HNBR), Ethylen-Propylen-Copolymer (EPM), Ethylen-Propylen-Dien-Terpolymer (EPDM).

Die Herstellung der erfindungsgemäßen Kautschukmischung kann auf unterschiedliche Weise erfolgen. So ist es möglich, das Gel in einem Masterbatch mit einer oder mehreren Kautschukkomponenten und gegebenenfalls weiteren üblichen Zusatzstoffen in einer ersten Mischstufe in das Mischaggregat zu geben. In einer zweiten Mischstufe können dann weitere Füllstoff zusammen mit dem Kupplungsagens und wiederum gegebenenfalls weiteren üblichen Zusatzstoffen in die Grundmischung gegeben werden. Es ist aber auch möglich, die Reihenfolge der Zugabe des Gels, des Füllstoffs und des Kupplungsagens' zu vertauschen. Nach der Fertigstellung der Grundmischung werden zu dieser nach einer eventuellen Zwischenlagerung die Vulkanisationsbestandteile gegeben und somit die Fertigmischung hergestellt. Nach der Formung eines Rohlings wird dieser der Vulkanisation unterzogen.

Wie bereits erwähnt, kann die erfindungsgemäße Kautschukmischung für die Herstellung von beanspruchten Gummiartikeln verwendet werden. Dazu zählen z. B. Luftfedern, Fördergurte, Riemen u. ä.

Besonders bevorzugt ist, wenn die erfindungsgemäße Kautschukmischung für die Herstellung von Bauteilen

von Fahrzeugreifen Anwendung findet. So können z. B. Seitenwände, Verstärkungsschichten u. a. daraus hergestellt werden. Wiederum bevorzugt ist, wenn der Laufstreifen eines Fahrzeugreifens, insbesondere Fahrzeugluftreifen, aus der erfindungsgemäßen Kautschukmischung gefertigt wird. Dabei kann der Laufstreifen einteilig oder mehrteilig (Cap- und Base-Aufbau) aufgebaut sein. Besonders bei Verwendung der Kautschukmischung für den Laufstreifenteil, der mit der Fahrbahn in Berührung kommt (Cap), wirkt sich die erfindungsgemäße Kautschukmischung zusätzlich vorteilhaft auf den Rollwiderstand und das Naßrutschverhalten aus. Ansonsten weisen die Fahrzeugluftreifen einen herkömmlichen Aufbau hinsichtlich Konstruktion und Mischungszusammensetzung auf.

Anhand des folgenden Ausführungsbeispiels soll die Erfindung näher erläutert werden:

**Beispiel 1 - Gel A**

*Lipolan 4046* ist ein carboxylierter SBR-Latex der Fa. Polymer Latex GmbH, Deutschland. Er enthält 40 Gew. % Styrol, ist mit 2 Gew.% Acrylsäure carboxyliert und weist einen Feststoffgehalt von 53 Gew.% auf. Der Gelgehalt des Latex beträgt 95,9 Gew.%. Der Quellungsindex des Gelanteils beträgt 7,7 % (Naßgewicht/Trockengewicht in Toluol). Die Latexteilchen haben einen Durchmesser (Ultrazentrifuge) von $d_{10}$ = 110 nm, $d_{50}$ = 192 nm und $d_{80}$ = 212 nm. Die Dichte der Latexteilchen beträgt 0,9744 g/cm$^3$. Die Glastemperatur des SBRs beträgt- 33,5 °C.

Für die Nachvernetzung mit Dicumylperoxix (DCP) wird der Latex auf eine Feststoffkonzentration von 30 Gew.% verdünnt und in einen Autoklaven gefüllt. DCP wird in fester Form bei Raumtemperatur zugegeben (1 phr bezogen auf Festprodukt). Durch Aufheizen des Latex auf 60 °C wird das DCP aufgeschmolzen und unter Rühren gut im Latex verteilt. Zur Entfernung von Sauerstoff wird der Reaktorinhalt bei 60 °C unter Rühren evakuiert und Stickstoff aufgepreßt. Der Evakuierungs/Stickstoff-Begasungszyklus wird 3 mal wiederholt. Danach wird der Reaktor auf 150 °C aufgeheizt. Um Latexanbackungen beim Aufheizen zu vermeiden, wird darauf geachtet, daß die Differenz zwischen Mantel- und Innentemperatur 10 °C nicht übersteigt Nach dem Aufheizen wird die Innentemperatur 45 min bei mindestens 150 °C gehalten. Danach wird das erhaltene Gel abgekühlt und über ein Monodurtuch filtriert.

Durch die Nachvernetzung mit DCP steigt die Glastemperatur auf -26,5 °C. Die Teilchengröße wird durch die Nachvernetzung praktisch nicht beeinflußt.

Um eine gute Verteilung der Gele in der späteren Kautschukmatrix sicherzustellen, wird das Gel-Latex mit NR zu einem NR-Masterbatch aufgearbeitet, wonach ein NR/Gel-Gewichtsverhältnis von 50/50 eingestellt wird.

Als NR-Masterbatchkomponente wird *Taytex* mit einer Feststoffkonzentration von 61 Gew.% (Importeur: Theodor Durrieu, Hamburg, Deutschland) verwendet.

Vor dem Vermischen des Gels mit dem NR-Latex wird dieser durch Zugabe von 5 Gew.% bezogen auf das Gewicht des NR-Latex' an 5%iger *Dresinate 731-Lösung* (Natriumsalz der disproportionierten Abietinsäure der Fa. Hercules, Wilmington, USA versetzt. Danach wird der NR- Latex mit dem Gel 10 min unter intensivem Rühren bei Raumtemperatur gemischt.

Nach der Herstellung der NR-Latex/Gelmischung wird eine Alterungsschutzmitteldispersion zugegeben. Hierfür wird eine 10%ige wässrige Dispersion eines aminischen Alterungsschutzmittels verwendet. Zur Stabilisierung von 1 kg Festprodukt verwendet man: 50 g einer Dispersion aus *Vulkanox* (N-Isopropyl-N -phenyl-p-phenylen-diamin/Fa. Bayer AG, Deutschland) 0,0913 g NaOH und 0,45 g Emulgator *T 11* (teilhydrierte Talgfettsäure/Fa. Procter & Gamble, Cincinnati, USA und 0,193 g *Oulu GP 331* (unmodifizierte Harzsäure/Fa. Veitsiluto, Oulu, Finnland).

Zur Koagulation wird die stabilisierte NR-Latex/Gelmischung in eine auf 60 °C erhitzte Elektrolytlösung eingerührt, wobei zur Koagulation von 1 kg Festprodukt (NR-Latex/Gelmischung) eine Elektrolytlösung aus 10 l Wasser; 75 g Kochsalz; 13,6 g Al-Sulfat 18 Kristallwasser; 1,5 g Gelatine vorgelegt werden. Während der Koagulation wird der pH-Wert mit 10%iger Schwefelsäure bei pH = 4,0 gehalten.

Das Produkt wird abfiltriert und mit ca. 40 l Lewatitwasser nachgewaschen und bei 70 °C im Vakuumtrockenschrank getrocknet. Erhalten wird somit Gel A/NR-Masterbatch.

**Beispiel 2 - Gel B**

Gel B wird ausgehend von dem SBR-Latex *Baystal 1357/4* der Polymer Latex GmbH, Deutschland (früher: Bayer France, Port Jérôme) durch Nachvernetzung mit 1,5 phr Dicumylperoxid und durch Pfropfung mit 5 phr Chlormethylstyrol hergestellt. Das Gel wird in reiner Form, d.h. ohne Anwendung der Masterbatchtechnologie, isoliert.

*Baystal 1357/4* ist ein nichtcarboxylierter SBR-Latex mit einem Styrolgehalt von *22* Gew.% und einem Feststoffgehalt von 38 Gew.%. Der Gelgehalt des Latex' beträgt 75 Gew.% und der Quellungsindex des vergelten Anteils beträgt 61 (Naßgewicht/Trockengewicht in Toluol). Die Latexteilchen haben einen Durchmesser von $d_{10}$ = 50 nm, $d_{50}$ = 56 nm und $d_{80}$ = 60 nm. Die Dichte der Latexteilchen beträgt 0,9281 g/cm$^3$. Die Glastemperatur des SBRs liegt bei -57 °C.

Durch die Nachvernetzung mit DCP wird die Teilchengröße des Gels praktisch nicht mehr beeinflußt; der Gelgehalt steigt auf 97,5 Gew.% und die Dichte auf 0,9717 g/cm$^3$; der Quellungsindex nimmt auf 5,4 % ab und die

Glastemperatur steigt auf - 26,5 °C.

Im Anschluß an die Nachvernetzung wird das Gel mit 5 phr Chlormethylstyrol bepfropft. Hierzu wird das Gel mit dem Na-Salz eines Alkylsulfonats (*Mersolat K 30* der Bayer AG, Deutschland) nachstabilisiert (0,75 % bezogen auf Gel-Feststoff) und mit Wasser auf eine Feststoffkonzentration von 22 % verdünnt. Bei Raumtemperatur gibt man bezogen auf Gel-Feststoff 5 phr Chlormethylstyrol (Produkt der Fa. Dow Chemical, Stade, Deutschland) und 0,2 % bezogen auf Gel-Feststoff an 50%igem p-Menthanhydroperoxid (*Triganox NT 50* der Fa. Akzo Nobel, Arnheim, Niederlande) sowie eine 13,4%ige (0,09 % bezogen auf Gel-Feststoff) wässrige Lösung des Na-Salzes von 1-Hydroxymethansulfinsäure-Dihydrat (*Rongalit*, Fa. BASF AG, Deutschland) zu und heizt unter Rühren auf 70 °C auf. Die Innentemperatur wird so lange bei 70 °C gehalten, bis ein Endfeststoffgehalt, der einem 100%igem Polymerisationsumsatz entspricht, erreicht ist (ca. 1 h). Während der Reaktion wird der pH-Wert der Reaktionsmischung durch Zutropfen einer 1 N wässrigen Natriumhydroxidlösung bei 10 gehalten.

Vor der Isolierung des Gels wird dieses mit einer Dispersion phenolischer Alterungsschutzmittel versetzt, wobei auf 100 g Latex-Feststoff 1,3 g der Dispersion eingesetzt werden (0,65 Gew.% bezogen auf Latex-Feststoff). Die Stabilisator-Dispersion enthält auf 10,8 Gew.-Teile Lewatitwasser und 1,2 Gew.-Teile Emulgator *NP 10* (ethoxyliertes Nonylphenol/Fa. Bayer AG, Deutschland), 1 Gew.-Teil *Vulkanox ZKF* (2,2-Methylen-bis-(4-methyl-6-cyclohexylphenol)/Fa. Bayer AG, Deutschland), 4 Gew.-Teile *Vulkanox KB* (2,6-Di-t-butyl-4-Methylphenol/Fa. Bayer AG, Deutschland), 7 Gew.-Teile *Irganox PS 800* (Fa. Ciba Geigy, Schweiz) und wird durch Ultraturrax-Dispergierung der Alterungsschutzmittelmischung in der auf 95 °C erhitzten wässrigen *NP 10*-Lösung hergestellt.

Zur Isolierung von 100 g des Gels B wird das mit Alterungsschutzmittel versetzte Gel in eine auf 65 °C erhitzte Fällflotte bestehend aus: 1245 g Lewatitwasser, 46,8 g Kochsalz und 25 g 1%iges Fällhilfsmittel (*Superfloc C 567 Flocculant*/Fa. Cytec Industrie, USA), die mit 10%iger Schwefelsäure auf pH 4 eingestellt ist, eingerührt. Während der Koagulation wird die Flotte durch Zugabe weiterer 10%iger Schwefelsäure bei pH 4,0 ± 0,5 gehalten. Das koagulierte Produkt wird 2 mal je 30 Minuten bei 65 °C gewaschen, wobei jeweils die 5fache Menge an Wasser bezogen auf Kautschuk eingesetzt wird. Nach der Trocknung wird das Gel B erhalten.

Nach der Pfropfung beträgt der elementaranalytisch bestimmte Chlorgehalt 0,4 Gew.%. Durch die Pfropfung wird die Lage der Glastemperatur nicht beeinflußt.

**Beispiel 3 - Gel C**

Gel C wird ausgehend von dem SBR-Latex *Baystal 1357* (Fa. Polymer Latex GmbH, Deutschland) durch Nachvernetzung mit 1,5 phr Dicumylperoxid und durch anschließende Pfropfung mit 10 phr Chlormethylstyrol hergestellt. Vor der Pfropfung wird die Kolloidstabilität des Gels durch den Zusatz von 1,5 Gew.% an *Mersolat K 30* (Fa. Bayer AG, Deutschland) verbessert. Die Aktivierung der Polymerisation erfolgt mit 0,4 Gew.% an *Triganox NT50* ( Fa. Akzo Nobel, Arnheim, Niederlande) und mit 0,18 Gew.% an *Rongalit* (Fa. BASF, Deutschland). Das Polymergel wird, wie bei Gel B beschrieben, stabilisiert und in reiner Form, d. h. ohne Anwendung der Masterbatchtechnolgie, aus dem Latex isoliert.

Nach der Pfropfung enthält das Gel C 1 Gew.% Chlor. Es hat einen Gelgehalt von 98 Gew.%, einen Quellungsindex von 3,8 und eine Glastemperatur von -24 °C.

**Beispiel 4 - Gel D**

Gel D wird ausgehend von einem SBR-Latex mit 39 Gew.% Styrol (Bayer AG, Leverkusen, Deutschland), $d_{10}$ = 108 nm; $d_{50}$ = 125 nm; $d_{80}$ = 135 nm; Gelgehalt: 95,5 Gew.%; Quellungsindex: 13,5; Glastemperatur: -34 °C durch Nachvernetzung mit 1,2 phr Dicumylperoxid und durch Pfropfung mit 3 phr Chlormethylstyrol hergestellt. Der vorvernetzte und modifizierte Latex wird, wie bei Gel A beschrieben, stabilisiert und kann als 50%iger NR-Masterbatch aufgearbeitet werden.

In der folgenden Tabelle 1 wurde eine Kautschukmischung auf herkömmliche Art und Weise hergestellt, wobei das Gel als Füllstoff eingesetzt worden ist:

Tabelle 1

| | ***Referenz - Stand der Technik [phr]*** | ***Referenz [phr]*** | ***Erfindung [phr]*** | ***Erfindung [phr]*** |
|---|---|---|---|---|
| **Bestandteile** | **1** | **2** | **3** | **4** |
| Naturkautschuk | 100 | 100 | 100 | 100 |
| Ruß N121 | 50 | 20 | 20 | 20 |

Tabelle 1 (fortgesetzt)

| | *Referenz - Stand der Technik [phr]* | *Referenz [phr]* | *Erfindung [phr]* | *Erfindung [phr]* |
|---|---|---|---|---|
| **Bestandteile** | **1** | **2** | **3** | **4** |
| **Gel B** | - | 50 | 50 | 50 |
| ***1,4-Dimethylaminobutan*** | - | - | - | 0,75 |
| 1,8-Diaminooctan | -- | -- | 0,75 | - |
| Alterungsschutzmittel 6PPD | 1,5 | 1,5 | 1,5 | 1,5 |
| Zinkoxid | 3 | 3 | 3 | 3 |
| Stearinsäure | 2 | 2 | 2 | 2 |
| Schwefel | 1,65 | 1,65 | 1,65 | 1,65 |
| Beschleuniger TBBS | 1 | 1 | 1 | 1 |

Die Einheit phr bezieht sich auf 100 Teile des Gewichtes der gesamten Kautschukkomponenten.
Die Kautschukmischung wurde bei 150 °C 30 min vulkanisiert.

Tabelle 2

| | *Referenz- Stand der Technik* | *Referenz* | *Erfindung* | *Erfindung* |
|---|---|---|---|---|
| **Eigenschaften** | **1** | **2** | **3** | **4** |
| Reißfestigkeit [Mpa] DIN 53504 | 24,6 | 19,7 | 21,3 | 20,7 |
| Bruchdehnung [%] DIN 53504 | 550 | 490 | 420 | 460 |
| Spannungswert 100 % [MPa] DIN 53504 | 1,98 | 2,19 | 2,78 | 2,42 |
| Spannungswert 300 % [MPa] DIN 53504 | 11,77 | 9,85 | 13,98 | 11,82 |
| Härte [Shore A] DIN 53505 | 60 | 63 | 66 | 65 |
| Rückprallelastizität [%] 23 °C DIN 53512 | 46 | 37 | 39 | 37 |
| Rückprallelastizität [%] 70 °C DIN 53512 | 57 | 62 | 62 | 61 |

Aus der Tabelle 2 geht hervor, daß herkömmliche Mischungen ohne Gele (Referenz 1) zwar eine gute mechanische Beständigkeit aufweisen, jedoch für die Verwendung in Reifenlaufstreifen aufgrund eines schlechten Naßrutschverhalten (höhere Rückprallelastizitätswerte bei 23 °C) und eines hohen Rollwiderstandes (geringere Werte der Rückprallelastizität bei 70 °C) nur unzureichend geeignet sind.
Werden nur modifizierte Gele, d.h. Gele, deren Oberfläche elektrophile Zentren aufweisen, eingemischt (Referenz 2), wird zwar der Rollwiderstand und das Naßrutschverhalten verbessert, jedoch nimmt die mechanische Haltbarkeit des Vulkanisates ab.
Werden modifizierte Gele in Kombination mit einem entsprechenden Kupplungsagens der Mischung zugesetzt (Erfindung 3 und 4) konnten Reißfestigkeit und Spannungswert des Vulkanisates angehoben werden. Der Spannungswert gibt eine Aussage über die Steifigkeit des vulkanisierten Produktes. Wenn diese Kautschukmischungen (Erfindungen 3 und 4) zur Herstellung von Laufstreifen für Fahrzeugreifen verwendet werden, bedeutet das eine erhöhte Steifigkeit z. B. der Profilklotzflanken, was zu einer besseren Traktion führt. Aus den Werten der Rückprallelastizität geht hervor, daß die erfindungsgemäßen Mischungen 3 und 4 im Vergleich zur Referenz 1 ein besseres Naßrutschverhalten zeigen bei gleichzeitig verringertem Rollwiderstand. Es können also insbesondere Fahrzeugluftreifen bereitgestellt werden, die bei optimalen Dämpfungseigenschaften erhöhte Spannungswerte aufweisen, wobei dadurch der Fahrkomfort, die Traktion und die Lebensdauer des Reifens verbessert wird.

**Patentansprüche**

**1.** Kautschukmischung, die zumindest eine Kautschukkomponente, zumindest einen Füllstoff, als Füllstoff ein Gel,

das im wesentlichen aus einem Kautschuk besteht, eine Partikelgröße von $3 \cdot 10^{-9}$ bis $1 \cdot 10^{-6}$ m und einen Quellungsindex in Toluol von 1 bis 15 besitzt, sowie übliche Zusatzstoffe enthält, **dadurch gekennzeichnet, daß**

**a)** das Gel an seiner Oberfläche elektrophile Zentren aufweist, und
**b)** die Kautschukmischung weiterhin eine als Kupplungsagens zwischen den zumindest vorvernetzten Gelpartikeln unter Ausbildung von chemischen Bindungen und Erzeugung eines Gelpartikelsystems wirkende Substanz mit folgender Struktur:

A - R - A

aufweist,
wobei

A: nucleophile Gruppe,

insbesondere $-NH_2$,
-SH,
-Si-OH,
-OH,
$-NHR^1$ mit $R^1$ = Alkylrest mit bis zu 3 Kohlenstoffatomen oder Phenylrest,

R: gesättigter oder ungesättigter Kohlenwasserstoffrest mit einem Molekulargewicht bis zu $10^6$ g/mol oder Siloxanrest mit einem Molekulargewicht bis zu $10^6$ g/mol.

**2.** Kautschukmischung nach Anspruch 1, **dadurch gekennzeichnet, daß** das Gel ein mit p-Chlormethylstyrol modifizierter Styrol-Butadien-Kautschuk mit einem Quellungsindex in Toluol von 1 bis 15 und einer Partikelgröße von $3 \cdot 10^{-9}$ bis $1 \cdot 10^{-6}$ m ist.

**3.** Kautschukmischung nach zumindest einem der vorhergehenden Ansprüche, **dadurch gekennzeichnet, daß** in der Kautschukmischung, bezogen auf 100 Teile des Gewichtes der gesamten Kautschukomponenten, 10 bis 110 phr Gel enthalten sind.

**4.** Kautschukmischung nach zumindest Anspruch 1, **dadurch gekennzeichnet, daß** die Substanz folgende Struktur aufweist:

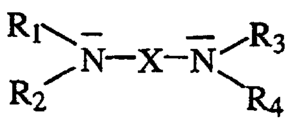

mit

| | |
|---|---|
| $R_1$, $R_2$, $R_3$, $R_4$ -H; | -Alkylrest verzweigt oder unverzweigt mit bis zu 4 C-Atomen |
| $R_1$, $R_2$, $R_3$, $R_4$ | können gleich oder verschieden voneinander sein |
| X: | -Alkylenrest verzweigt oder unverzweigt oder cyclisch mit bis zu 12 C-Atomen |

**5.** Kautschukmischung nach Anspruch 4, **dadurch gekennzeichnet, daß** die Substanz 1,8-Diaminooctan ist.

**6.** Kautschukmischung nach Anspruch 4, **dadurch gekennzeichnet, daß** die Substanz 1,4-Bisdimethylaminobutan ist.

**7.** Kautschukmischung nach zumindest einem der vorhergehenden Ansprüche, **dadurch gekennzeichnet, daß** die Substanz folgende Struktur aufweist:

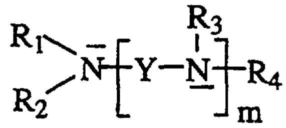

mit

| | |
|---|---|
| $R_1$, $R_2$, $R_3$, $R_4$ -H; | -Alkylrest verzweigt oder unverzweigt mit bis zu 4 C-Atomen |
| $R_1$, $R_2$, $R_3$, $R_4$ | können gleich oder verschieden voneinander sein |
| Y: | -Alkylenrest verzweigt oder unverzweigt mit bis zu 4 C-Atomen |
| m: | 1 bis 6 |

**8.** Kautschukmischung nach Anspruch 7, **dadurch gekennzeichnet, daß** die Substanz Pentaethylenhexamin ist.

**9.** Kautschukmischung nach zumindest einem der vorhergehenden Ansprüche, **dadurch gekennzeichnet, daß** die Substanz OH-Gruppen terminiertes Polybutadien ist.

**10.** Kautschukmischung nach zumindest einem der vorhergehenden Ansprüche, **dadurch gekennzeichnet, daß** die Substanz $NH_2$-Gruppen terminiertes Copolymer aus Butadien und Acrylnitril ist.

**11.** Kautschukmischung nach Anspruch 10, **dadurch gekennzeichnet, daß** das Copolymer ein Molekulargewicht von 3000 bis 4500 g/mol und ein Acrylnitrilgehalt von 5 bis 30 Gewichtsprozent aufweist.

**12.** Kautschukmischung nach zumindest einem der vorhergehenden Ansprüche, **dadurch gekennzeichnet, daß** die Substanz $NH_2$-Gruppen enthaltendes Polydimethylsiloxan ist.

**13.** Kautschukmischung nach zumindest einem der vorhergehenden Ansprüche, **dadurch gekennzeichnet, daß** die Kautschukkomponente ausgewählt ist aus Naturkautschuk und/oder synthetisches Polyisopren und/oder Styrol-Butadien-Copolymer und/oder Polybutadien.

**14.** Verwendung der Kautschukmischung nach zumindest einem der vorhergehenden Ansprüche für die Herstellung von Fahrzeugluftreifen, insbesondere für deren Laufstreifen.

## Claims

**1.** Rubber mixture, which contains at least one rubber component, at least one filler, a gel as the filler, which substantially comprises a rubber and has a particle size of $3 \cdot 10^{-9}$ to $1 \cdot 10^{-6}$ m and a swelling index in toluene of 1 to 15, as well as conventional additives, **characterised in that**

a) the gel has electrophilic centres on its surface, and
b) furthermore the rubber mixture has a substance acting as the coupling agent between the at least previously crosslinked gel particles to form chemical bonds and to produce a gel particle system and having the following structure:

$$A - R - A,$$

wherein

A is a nucleophilic group,
more especially $-NH_2$
-SH,
-Si-OH,
-OH,
$-NHR^1$ with $R^1$ being an alkyl residue having up to 3 carbon atoms or a phenyl residue, and

R is a saturated or unsaturated hydrocarbon residue having a molecular weight of up to $10^6$ g/mol or a siloxane residue having a molecular weight of up to $10^6$ g/mol.

2. Rubber mixture according to claim 1, **characterised in that** the gel is a styrene-butadiene rubber modified with p-chloromethyl styrene and having a swelling index in toluene of 1 to 15 and a particle size of $3 \cdot 10^{-9}$ to $1 \cdot 10^{-6}$ m.

3. Rubber mixture according to at least one of the preceding claims, **characterised in that** 10 to 110 phr gel are contained in the rubber mixture, relative to 100 parts of the weight of the entire rubber component.

4. Rubber mixture according to at least claim 1, **characterised in that** the substance has the following structure:

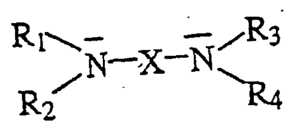

wherein $R_1$, $R_2$, $R_3$ and $R_4$ are H or a branched or unbranched alkyl residue having up to 4 C atoms, $R_1$, $R_2$, $R_3$ and $R_4$ may be the same or different from one another, and X is a branched or unbranched or cyclic alkylene residue having up to 12 C atoms.

5. Rubber mixture according to claim 4, **characterised in that** the substance is 1,8-diaminooctane.

6. Rubber mixture according to claim 4, **characterised in that** the substance is 1,4-bisdimethyl aminobutane.

7. Rubber mixture according to at least one of the preceding claims, **characterised in that** the substance has the following structure:

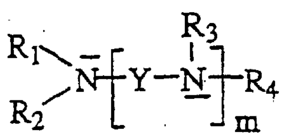

wherein $R_1$, $R_2$, $R_3$ and $R_4$ are H or a branched or unbranched alkyl residue having up to 4 C atoms, $R_1$, $R_2$, $R_3$ and $R_4$ may be the same or different from one another, Y is a branched or unbranched alkylene residue having up to 4 C atoms, and m is 1 to 6.

8. Rubber mixture according to claim 7, **characterised in that** the substance is pentaethylene hexamine.

9. Rubber mixture according to at least one of the preceding claims, **characterised in that** the substance is polybutadiene terminated with OH groups.

10. Rubber mixture according to at least one of the preceding claims, **characterised in that** the substance is a copolymer formed from butadiene and acrylonitrile and terminated with $NH_2$ groups.

11. Rubber mixture according to claim 10, **characterised in that** the copolymer has a molecular weight of 3000 to 4500 g/mol and an acrylonitrile content of 5 to 30 percent by weight.

12. Rubber mixture according to at least one of the preceding claims, **characterised in that** the substance is polydimethyl siloxane containing $NH_2$ groups.

13. Rubber mixture according to at least one of the preceding claims, **characterised in that** the rubber component is selected from natural rubber and/or synthetic polyisoprene and/or styrene-butadiene copolymer and/or polybutadiene.

**14.** Use of the rubber mixture according to at least one of the preceding claims for the manufacture of pneumatic vehicle tyres, more especially for the tread strips thereof.

## Revendications

**1.** Composition de caoutchouc contenant au moins un composant de caoutchouc, au moins une charge, comme charge un gel essentiellement constitué d'un caoutchouc, présentant une dimension de particule comprise entre 3 x $10^{-9}$ et 1 x $10^{-6}$ m et un indice de gonflement dans le toluène compris entre 1 et 15, ainsi que des additifs usuels, **caractérisée**

a) en ce que le gel présente à sa surface des centres électrophiles et

b) en ce que la composition de caoutchouc contient, en outre, une substance agissant comme agent de couplage entre les particules de gel au moins préréticulés en créant des liaisons chimiques et en formant un système de particules de gel, ayant la structure suivante

$$A - R - A$$

où

A représente un groupe nucléophile, en particulier $-NH_2$, -SH, -Si-OH, -OH, $-NHR^1$, $R^1$ étant un reste alkyle comportant jusqu'à 3 atomes de carbone ou un reste phényle,

R représente un reste hydrocarboné saturé ou insaturé, ayant un poids moléculaire allant jusqu'à $10^6$ g/mole ou un reste siloxane ayant un poids moléculaire allant jusqu'à $10^6$ g/mole.

**2.** Composition de caoutchouc selon la revendication 1, **caractérisée en ce que** le gel est un caoutchouc styrène-butadiène modifié par du p-chlorométhylstyrène, ayant un indice de gonflement dans le toluène compris entre 1 et 15 et une dimension de particule comprise entre 3 x $10^{-9}$ et 1 x $10^{-6}$ m.

**3.** Composition de caoutchouc selon l'une des revendications précédentes, **caractérisée en ce que** sont contenus dans la composition de caoutchouc, rapporté à 100 parties en poids de l'ensemble des composants de caoutchouc, 10 à 110 phr de gel.

**4.** Composition de caoutchouc selon au moins la revendication 1, **caractérisée en ce que** la substance présente la structure suivante

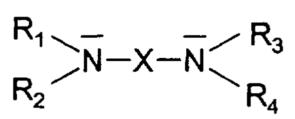

$R_1$, $R_2$, $R_3$ et $R_4$ représentant H, un reste alkyle ramifié ou non comportant jusqu'à 4 atomes de carbone,
$R_1$, $R_2$, $R_3$ et $R_4$ pouvant être identiques ou différents les uns des autres,
X représentant un reste alkylène ramifié ou non ou cyclique comportant jusqu'à 12 atomes de carbone

**5.** Composition de caoutchouc selon la revendication 4, **caractérisée en ce que** la substance est le 1,8-diaminooctane.

**6.** Composition de caoutchouc selon la revendication 4, **caractérisée en ce que** la substance est le 1,4-bisdiméthylaminobutane.

**7.** Composition de caoutchouc selon l'une des revendications précédentes, **caractérisée en ce que** la substance présente la structure suivante

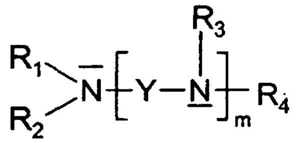

| | |
|---|---|
| $R_1$, $R_2$, $R_3$ et $R_4$ | représentant H, un reste alkyle ramifié ou non comportant jusqu'à 4 atomes de carbone, |
| $R_1$, $R_2$, $R_3$ et $R_4$ | pouvant être identiques ou différents les uns des autres, |
| Y | représentant un reste alkyle ramifié ou non comportant jusqu'à 4 atomes de carbone, |
| m | étant compris entre 1 et 6. |

**8.** Composition de caoutchouc selon la revendication 7, **caractérisée en ce que** la substance est la pentaéthylènehexamine.

**9.** Composition de caoutchouc selon au moins l'une des revendications précédentes, **caractérisée en ce que** la substance est le polybutadiène terminé par des groupes OH.

**10.** Composition de caoutchouc selon au moins l'une des revendications précédentes, **caractérisée en ce que** la substance est un copolymère de butadiène d'acrylonitrile, terminé par des groupes $NH_2$.

**11.** Composition de caoutchouc selon la récipient 10, **caractérisée en ce que** le copolymère présente un poids moléculaire compris entre 3 000 et 4 500/mole et une teneur en acrylonitrile comprise entre 5 et 30 % en poids.

**12.** Composition de caoutchouc selon au moins l'une des revendications précédentes, **caractérisée en ce que** la substance est le polydiméthylsiloxane contenant des groupes $NH_2$.

**13.** Composition de caoutchouc selon au moins l'une des revendications précédentes, **caractérisée en ce que** le composant de caoutchouc est choisi parmi le caoutchouc naturel et/ou le polyisoprène synthétique et/ou un copolymère styrène-butadiène et/ou le polybutadiène.

**14.** Utilisation de la composition de caoutchouc selon l'une des revendications précédentes pour la fabrication de pneumatiques pour véhicules, en particulier pour leurs bandes de roulement.